# EUROPEAN PATENT SPECIFICATION

(11) **EP 1 654 315 B1**
(45) Date of publication and mention of the grant of the patent: **04.06.2008**
(21) Application number: 04773821.6
(22) Date of filing: 25.05.2004
(51) Int. Cl.: C08K 5/5317, C08K 5/49, C08L 55/02, C08K 3/28, C08K 5/5357, C08K 5/00

(54) **FLAMEPROOF THERMOPLASTIC RESIN COMPOSITION**
FLAMMGESCHÜTZTE THERMOPLASTISCHE HARZZUSAMMENSETZUNG
COMPOSITION DE RESINE THERMOPLASTIQUE ININFLAMMABLE

(30) Priority: 14.08.2003 KR 2003056532
(43) Date of publication of application: 10.05.2006
(73) Proprietor: Cheil Industries Inc., Gumi-si, Gyeongsangbuk-do 730-710 (KR)
(72) Inventor: HONG, Sang Hyun, 611 Saesolgeumho Apt., Seoul, 152-050 (KR); AHN, Sung Hee, 102-503 Geumho bestvill, Seoul, 133-020 (KR); RYU, Young Sik, 901-903 Sindonga Apt., Anyang-si, Gyeonggi-do, 431-080 (KR); KIM, Tae Uk, 107-504 Jugong Apt., Suwon-si, Gyeonggi-do, 440-200 (KR)
(74) Representative: Bublak, Wolfgang
(86) International application number: PCT/KR2004/001236
(87) International publication number: WO 2005/017021

(56) References cited:
- WO-A-00/17268
- JP-A- 11 343 382
- KR-A- 20010 083 602
- KR-A- 20030 030 421
- KR-B1- 100 302 417
- US-A- 4 397 759
- US-A- 4 618 633
- US-A- 4 632 946
- US-A- 5 030 674

## Description

### Field of the Invention

The present invention relates to an environment-friendly styrenic resin composition with good flame retardancy. More particularly, the present invention relates to a flameproof thermoplastic resin composition with good transparency and impact resistance by employing a ring-shaped alkyl phosphonic acid ester compound to transparent ABS resin.

### Background of the Invention

Generally, acrylonitrile-butadiene-styrene copolymer (hereinafter, ABS resin) has a good balance of physical properties such as processability of styrene, toughness and chemical resistance of acrylonitrile, and impact resistance of ' butadiene, and is excellent in appearance. Therefore, the ABS resin has been widely used in automobile, electrical appliances, office appliances, electronic goods, toys and so on. However, the ABS resin is normally opaque, so, the application of such ABS resin has been restricted.

The reason why ABS resin is opaque is that since refractive index between matrix resin and dispersed rubber phase is different, the light is refracted on the interface therebetween and the light in the visible ray region is diffused depending upon the size of the rubber particles. Therefore, in order to provide the ABS resin with transparency, it is required that the refractive index of the rubber component as domain should be identical to that of the resin component as matrix, and the size of the rubber particles should be adjusted properly to minimize the diffusion of the light in the visible ray region.

In order to produce transparent ABS resin, there has been proposed to adding (meth)acrylic acid alkyl ester compound to a mixture of vinyl aromatic compound and unsaturated nitrile compound in the presence of butadiene-rubber seed to coincide the refractive index between rubber polymer and graft polymer. The resulting resin has enhanced transparency and color while maintaining impact resistance of ABS resin.

Japanese Laid-Open Patent No. 2-115206 discloses a method for graft polymerizing by using cross-linking monomer to a polybutadiene rubber to obtain transparency and impact resistance. Japanese Laid-Open Patent No. 62-84109 discloses a resin composition having improved impact resistance and transparent external appearance by using SBR rubber latices having different particle size.

In addition, Korean patent Laid-Open Patent No.2003-14777 discloses a method ofABS resin composition having good transparency and natural color while maintaining good mechanical and thermal properties of ABS resin by graft polymerizing a monomer mixture of styrene, unsaturated nitrile and (meth)acrylic acid alkyl ester compound to rubber component in the first step by means of azo type oil-soluble initiator to form a core portion which endows impact modifying effect and graft-polymerizing the monomer mixture in the second step by means of water-soluble initiator to form a shell layer on the surface of the rubber component.

However, when ABS resin is employed to heat-emitting products, such as computers and facsimiles, the resin should further have good flame retardancy, because the resin is extremely easily flammable.

U.S. patent No. 4,581,403 discloses use of polybromodiphenyl ether as a flame retardant to give flame-retardant property of a transparent ABS resin. However, such method for improving the flame-retardant property by using a halogen- and antimony-containing compound results in the corrosion of the mold itself by the hydrogen halide gases released during the molding process and is fatally harmful due to the toxic gases liberated in case of fire. Especially, since a polybromodiphenyl ether, can produce toxic gases such as dioxin or furan during combustion, a major concern in this field is to develop a flame retardant which is prepared without a halogen-containing compound.

As a method for conferring flame-retardancy without using a halogen-based flame retardant, a method using an aromatic phosphoric acid ester compound as a flame retardant is commonly used. However, in order to impart sufficient flame retardancy, the resin composition should contain a large amount of phosphoric acid ester compound, which results in deterioration of heat resistance and transparency.

Accordingly, the present inventors have developed a thermoplastic resin composition which has good flame retardancy as well as transparency and mechanical strength by employing ring-shaped alkyl phosphonic acid ester compound as a flame retardant to transparent ABS resin. The resin composition of the present invention may further contain aromatic phosphoric acid ester compound optionally.

### Objects of the Invention

An object of the present invention is to provide a flame retardant thermoplastic resin composition having stability for the fire.

Another object of the present invention is to provide an environment-friendly thermoplastic resin composition which does not contain a halogen-containing compound which causes the environmental pollution during preparation or combustion of the resin.

A further object of the present invention is to provide a flame retardant thermoplastic resin composition with good mechanical properties.

A further object of the present invention is to provide a flame retardant thermoplastic resin composition with good transparency.

Other obj ects and advantages of this invention will be apparent from the ensuing disclosure and appended claims.

### Summary of the Invention

The flameproof thermoplastic resin composition according to claim 1 of the present invention comprises (A) 100 parts by weight of a transparent ABS resin containing (a₁) 20 to 100 % by weight of graft copolymer composed of 5 to 60 parts by weight of a rubber polymer, 1 to 30 parts by weight of aromatic vinyl compound, 10 to 40 parts by weight of a unsaturated nitrile compound and 10 to 60 parts by weight of a (meth)acrylic acid alkyl ester compound; and (a₂) 0 to 80 % by weight of styrenic copolymer composed of 40 to 80 parts by weight of a (meth)acrylic acid alkyl ester compound, 10 to 30 parts by weight of an aromatic vinyl compound and 0 to 50 parts by weight of an unsaturated nitrile compound; (B) 0.1 to 15 parts by weight of a specific ring-shaped alkyl phosphonic acid ester compound; and optionally (C) 0 to 20 parts by weight of an aromatic phosphoric acid ester compound.

### Detailed Description of the Invention

### (A) Transparent ABS Resin

The transparent ABS resin used in the present invention is composed of (a₁) 20 to 100 % by weight of graft copolymer and (a₂) 0 to 80 % by weight of styrenic copolymer, preferably, (a₁) 20 to 70 % by weight of graft copolymer and (a₂) 30 to 80 % by weight of styrenic copolymer.

### (a₁) Graft Copolymer

Examples of rubber used for a graft copolymer are a diene-containing rubber such as polybutadiene, poly(styrene-butadiene) and poly(acrylonitrile-butadiene); a saturated rubber in which hydrogen is added to said diene-containing rubber; an isoprene rubber; an acryl rubber such as poly(butyl acrylic acid); and a terpolymer of ethylene-propylene-diene(EPDM), etc. It is preferable to use a diene-containing rubber, more preferably a butadiene-containing rubber.

Examples of aromatic vinyl-containing monomers for preparing the graft copolymer are styrene, α-methylstyrene, p-methylstyrene, etc. In the above examples, styrene is the most preferable.

At least two copolymerizable monomer may be introduced and applied to said aromatic vinyl-containing monomers. It is preferred that the copolymerizable monomer is a unsaturated nitrile-containing compound such as acrylonitrile, methacrylonitrile, and (meth)acrylic acid alkyl ester containing 1 to 10 carbon atoms such as methylmethacrylate, ethylmethacrylate, butylmethacrylate.

The graft copolymer according to the present invention is prepared by graft polymerizing 5 to 60 parts by weight of rubber polymer, 1 to 30 parts by weight of aromatic vinyl compound, 10 to 40 parts by weight of unsaturated nitrile compound and 10 to 60 parts by weight of (meth)acrylic acid alkyl ester compound. In the practice of the graft polymerization step, the grafting monomers can be added to the base rubber latex all at once, or it may also be added in portions or continuously. It is also allowable to graft-polymerize each of the monomers in two-step.

The two-step reaction comprises a first step of graft-polymerizing monomers into a rubber polymer by using oil-soluble peroxide initiator and a second step of preparing a graft copolymer having a core-shell structure by using water-soluble initiator such as potassium peroxidisulfate in which the monomers are grafted on the surface of the rubber particles when the conversion rate reaches to more than 90 %.

The rubber particle to prepare the graft copolymer has preferably an average particle size of from 0.1 to 4 µm considering the impact strength and appearance.

### (a₂) Styrenic Copolymer

The styrenic copolymer of the present invention can be prepared by adding (meth)acrylic acid alkyl ester compound, aromatic vinyl monomer and unsaturated nitrile monomer to a reactor simultaneously to copolymerize the monomers in one-step. It is also allowable to prepare the styrenic copolymer by two-step, that is, adding (meth)acrylic acid alkyl ester compound and aromatic vinyl monomer to a reactor at a time to initiate the copolymerzation and then adding unsaturated nitrile monomer thereto continuously or in portion several times to complete the polymerization.

The two-step polymerization is carried out by adding a monomer mixture consisting of 40 to 80 parts by weight of (meth)acrylic acid alkyl ester compound and 10 to 30 parts by weight of aromatic vinyl monomer, initiator, dispersant, dispersion aid, molecular weight controlling agent and deionized water to a reactor all at once followed by agitating and increasing the reaction temperature to initiate the copolymerzation and then adding 0 to 50 parts by weight of unsaturated nitrile monomer thereto continuously or in portion several times to complete the polymerization. The one-step polymerization is carried out in the same manner as the two-step polymerization except that the unsaturated nitrile monomer is added together with other monomers in the first step.

The reaction temperature varies depending upon the kind of initiator used. For examples, when azo-type initiator such as azobisisobutyronitrile is used, the polymerization reaction proceeds at 70 to 85 °C for 1 to 5 hours and the temperature is increased to 100 °C to polymerize for 20 to 90 minutes and the reaction was then terminated. When hydroperoxide type initiator such as benzoylperoxide is used, the polymerization reaction proceeds at 85 to 100 °C for 1 to 5 hours and heated again to 100 °C and allowed to stand for 20 to 90 minutes until the completion of the polymerization. It is preferable that the polymerization temperature profile is slope type, in which the polymerization reaction starts at low temperature but completes at high temperature. If the polymerization proceeds at a constant temperature throughout the reaction, the polymerization time may be increased or runaway reaction may be occurred at the beginning of the polymerization. The amount of the initiator is 0.01 to 1 parts by weight based on total weight of copolymer, preferably 0.1 to 0.3 parts by weight.

The examples of the aromatic vinyl-containing monomer are styrene, o-, m-, p-ethylstyrene, a -methylstyrene. The examples of the unsaturated nitrile compound are acrylonitrile, methacrylonitrile and ethacrylonitrile, etc. The examples of the (meth)acrylic acid alkyl ester compound are (meth)acrylic acid alkyl ester containing 1 to 10 carbon atoms such as methylmethacrylate, ethylmethacrylate, butylmethacrylate. In the above examples, methymethacrylate is preferable.

The examples of the dispersant are metal phosphates such as tricalcium phosphate, trisodiumphosphate, polyvinylalcohol, polyvinylpyrrolidone and so on.

The amount of the dispersant is 0.05 to 1 parts by weight based on total weight of copolymer, preferably 0.1 to 0.5 parts by weight.

For the dispersion aid, either water soluble or oil soluble one can be used.

The examples of the molecular weight controlling agent are mercaptans, terpinolenes, α-methylstyrene oligomers and the mixture thereof. The amount of the molecular weight controlling agent is 0 to 1 parts by weight based on total weight of copolymer, preferably 0.4 to 0.7 parts by weight. The resulting solid is dehydrated and dried to obtain a styrenic copolymer in a powdery state.

### (B) Ring-shaped Alkyl Phosphonic Acid Ester Compound

The ring-shaped alkyl phosphonic acid ester compound of the present invention is represented by the following chemical Formula (I): 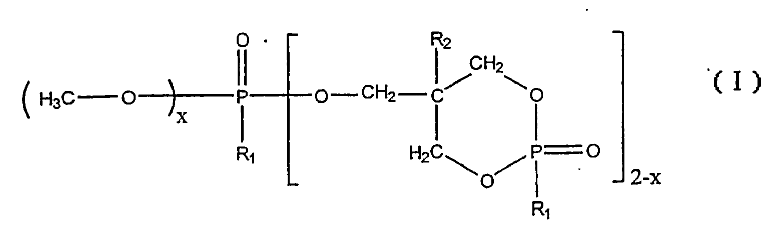 wherein R₁ and R₂ are independently of each other C₁-C₄ alkyl and x is 0 or 1.

Examples of the ring-shaped alkyl phosphonic acid ester compound having the structural formula (I) include methyl-bis(5-ethyl-2-methyl-1,3,2-dioxaphorinan- 5yl) methyl methyl phosphonic acid ester P-oxide, methyl-bis(5-ethyl-2-methyl- 1,3,2-dioxaphorinan-5yl) phosphonic acid ester P, P'-dioxide.

The ring-shaped alkyl phosphonic acid ester compound (B) of present invention can be used alone or in combination therewith.

The ring-shaped alkyl phosphonic acid ester compound (B) of present invention is used in the amount of from 0.5 to 15 parts by weight, preferably 1 to 10 parts by weight, per 100 parts by weight of the transparent ABS resin.

### (C) Aromatic Phosphoric Acid Ester Compound

The aromatic phosphoric acid ester compound used in the present invention is a compound having the following structural formular (II): 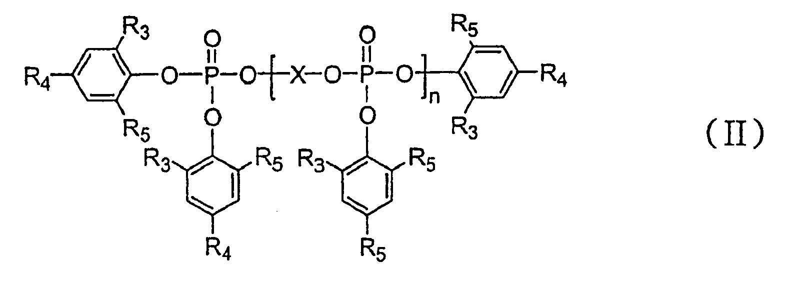 wherein R₃, R₄ and R₅ independently of one another are hydrogen or C₁-C₄ alkyl; X is a C₆-C₂₀ aryl group or alkyl-substituted C₆-C₂₀ aryl group that are derivatives from a dialcohol derivative such as resorcinol, hydroquinol and bisphenol-A; and n is 0~4.

Where n is 0, the compound represented in the structural formular (II) is triphenyl phosphate, tricresyl phosphate, trixyrenyl phosphate, tri(2,6-dimethyl phenyl) phosphate, tri(2,4,6-trimethyl phenyl) phosphate, tri(2,4-ditertiary butyl phenyl) phosphate, tri(2,6-ditertiary butyl phenyl) phosphate, and the like, and where n is 1, the compounds include resorcinol bis(diphenyl) phosphate, resorcinol bis(2,6-dimethyl phenyl) phosphate, resorcinol bis(2,4-ditertiary butyl phenyl) phosphate, hydroquinol bis (2,6-dimethyl phenyl) phosphate, hydroquinol bis(2,4-ditertiary butyl phenyl) phosphate, and the like. The aromatic phosphoric acid ester compounds can be used alone or in combination therewith.

In the present invention, the aromatic phosphoric acid ester compound can be used in the amount of 0 to 20 parts by weight, preferably 0 to 10 parts by weight.

The flame retardant resin composition of the present invention may further contain conventional additives, for example, heat stabilizers, anti-oxidants, light stabilizers, organic or inorganic pigment, dye and inorganic filler. The additives are employed in the amount of 0 to 30 parts by weight on the basis of 100 parts by weight of the base resin.

The present invention may be better understood by reference to the following examples that are intended for the purpose of illustration and are not to be construed as in any way limiting the scope of the present invention, which is defined in the claims appended hereto.

### Examples

The components to prepare flameproof thermoplastic resin compositions in Examples and Comparative Examples are as follows:

### (A) Transparent ABS Resin

### (a₁) Graft copolymer

### (1) First step

To a 10 L glass reactor provided with a agitation impeller, thermometer, mantle, reflux condenser, 50 parts by weight of polybutadiene latex (solid content), 10 parts by weight of methylmethacrylate, 3 parts by weight of styrene, 1 parts by weight of acrylonitrile, 120 parts of deionized water, 0.5 parts of potassium stearate, 0.3 parts by weight of t-dodecyl mercaptan, and 0.2 parts by weight of cumene hydroperoxide were added and mixed. And, the mixture was heated to the temperature of about 60 °C . To the reactant, 0.003 parts by weight of ferrous sulfate, 0.2 parts by weight of sodium sulfoxylate formadehyde, and 0.1 parts by weight of ethylenediamine tetraacetate were added to the reactor and polymerized for 1 hour to reach to the conversion rate of 90 %.

### (2) Second step

After the first step, 0.4 parts by weight of potassium peroxidisulfate(KPS) was added to the reactor followed by feeding a compound mixture to the reactor continuously for 3 hours to proceed the graft polymerization. The compound mixture was prepared by mixing 25.5 parts by weight of methylmethacrylate, 8 parts by weight of styrene and 2.5 parts by weight of acrylonitrile. After completion of feeding the compound mixture, the reaction was continued for 1 hour and then terminated. The resulting graft latex was cooled to the room temperature, and then coagulated, dehydrated and dried to obtain graft ABS resin (g-ABS) in powder form.

### (a₂) Styrenic copolymer

50 parts by weight of methylmethacrylate(MMA), 20 parts by weight of styrene, 0.2 parts by weight of azobisisobutyronitrile (AIBN), 0.5 parts by weight of tricalcium phosphate, 0.01 parts by weight of carboxylic acid polymers, 0.2 parts by weight of t- mercaptane and 200 parts of deionized water were charged into a reactor and heated to the temperature of about 70 °C while being agitated sufficiently to proceed the polymerization. Next, about 30 parts by weight of acrylonitrile, was added to the reactor continuously for 3 hours. The polymerization temperature was gradually elevated to 90 °C for 3 hours, and further elevated to 100 °C . The reaction was continued at 100 °C for 60 minutes, and the temperature was cooled to terminate the reaction. The resulting copolymer (B) was washed and dried to obtain white bead.

### (B) Ring-shaped Alkyl Phosphonic Acid Ester Compound

Antiblaze 1045 of Rhodia Co. [a mixture of 8 % by weight of methyl-bis(5-ethyl-2-methyl-1,3,2-dioxaphorinan-5yl) methyl methyl phosphonic acid ester P-oxide and 85 % by weight of methyl-bis (5-ethyl-2-methyl-1,3,2-dioxaphorinan- 5yl) phosphonic acid ester P, P'-dioxide] was used.

### (C) Aromatic Phosphoric Acid Ester Compound

Resorcinol bis (2,6-dimethylphenyl)phosphate produced by Daihachi Chemical of Japan (product name: PX200) was used.

### Examples 1~4

The components as shown in Table 1 were mixed and the mixture was extruded at 180~250 °C with a conventional twin screw extruder in pellets. The resin pellets were dried at 80 °C for 3 hours, and molded into test specimens using a 6 oz injection molding machine at 180~280 °C and mold temperature of 40~80°C .

The flame retardancy of the test specimens was measured in accordance with UL94VB with a thickness of 1/10". The impact strength was measured according to Izod impact strength ASTM D-256 A (1/8" notch). The transmission coefficient of the entire light was measured by use of color computer of Suga Instrument of Japan with a 10 x 10 x 3 mm specimen.

### Comparative Examples 1-2

Comparative Examples 1-2 were conducted in the same manner as in Example 1 except that resorcinol bis (2,6-dimethylphenyl)phosphate was used as a flame retardant instead of ring-shaped alkyl phosphonic acid ester compound.

The test results are presented in Table 1.

**Table 1**

| | | Examples | | | | Comparative Examples | |
|---|---|---|---|---|---|---|---|
| | | 1 | 2 | 3 | 4 | 1 | 2 |
| (A) transpatentABS resin | (a₁) | 27 | 27 | 30 | 35 | 27 | 32 |
| | (a₂) | 73 | 73 | 70 | 65 | 68 | 68 |
| (B) ring-shaped alkyl phosphonic acid ester | | 4 | 3 | 5 | 3 | - | - |
| (C) aromatic phosphoric acid ester compound | | - | 2 | - | 3 | 6 | 15 |
| UL 94 flame retardancy (1/10") | | V2 | V2 | V2 | V2 | Fail | V2 |
| Izod impact strength 1/8"(kgf·cm/cm) | | 11 | 10 | 11 | 12 | 9 | 4 |
| Transmission coefficient of the entire light (%) | | 89.2 | 88.0 | 89.0 | 88.7 | 85.5 | 82.3 |

As shown above, the resin compositions employing ring-shaped alkyl phosphonic acid ester compound as a flame retardant show good dripping flame retardancy and transparency without no deterioration of impact strength compared to those employing aromatic phosphoric acid ester compound alone.

## Claims

1. A flame retardant thermoplastic resin composition comprising:
(A) 100 parts by weight of a transparent ABS resin containing (a₁) 20 to 100 % by weight of graft copolymer composed of 5 to 60 parts by weight of a rubber polymer, 1 to 30 parts by weight of aromatic vinyl compound, 10 to 40 parts by weight of a unsaturated nitrile compound and 10 to 60 parts by weight of a (meth)acrylic acid alk-yl ester compound; and (a₂) 0 to 80 % by weight of styrenic copolymer composed of 40 to 80 parts by weight of a (meth)acrylic acid alkyl ester compound, 10 to 30 parts by weight of an aromatic vinyl compound and 0 to 50 parts by weight of a unsaturated nitrile compound; and
(B) 0.1 to 15 parts by weight of a ring-shaped alkyl phosphonic acid ester compound represented by the following formula (I): 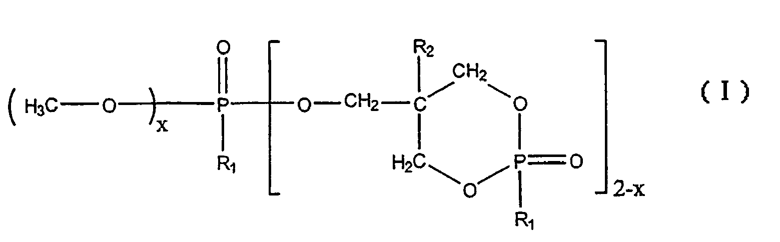 wherein R₁ and R₂ are independently of each other C₁-C₄ alkyl and x is 0 or 1.

2. The flame retardant thermoplastic resin composition as defined in claim 1, wherein said rubber polymer is selected from the group consisting of a diene-containing rubber, a saturated rubber in which hydrogen is added to said diene-containing rubber, an isoprene rubber, an acryl rubber and a terpolymer of ethylene-propylene-diene(EPDM); said aromatic vinyl monomer is selected from the group consisting of styrene, a -methylstyrene, p-methylstyrene; said unsaturated nitrile compound is selected from the group consisting of acrylonitrile, methacrylonitrile and ethacrylonitrile; said (meth)acrylic acid alkyl ester compound is selected from the group consisting of methylmethacrylate, ethylmethacrylate and butylmethacrylate.

3. The flame retardant thermoplastic resin composition as defined in claim 1, which further comprising 0 to 20 parts by weight of aromatic phosphoric acid ester compound represented by the following formula (II): 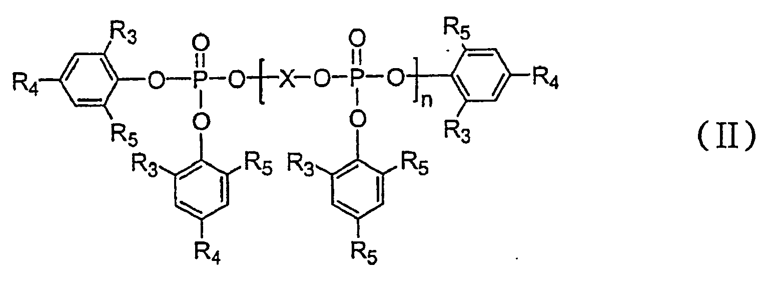 wherein R₃, R₄ and R₅ independently of one another are hydrogen or C₁-C₄ alkyl; X is a C₆-C₂₀ aryl group or alkyl-substituted C₆-C₂₀ aryl group that are derivatives from a dialcohol derivative such as resorcinol, hydroquinol and bisphenol-A; and n is 0~4.

4. The flame retardant thermoplastic resin composition as defined in claim 1, which further comprises 0 to 30 parts by weight of an additive selected from the group consisting of heat stabilizers, anti-oxidants, light stabilizers, organic or inorganic pigment, dye and inorganic filler.

5. The flame retardant thermoplastic resin composition as defined in claim 1, said transparent ABS resin is composed of (a₁) 20 to 70 % by weight of graft copolymer and (a₂) 30 to 80 % by weight of styrenic copolymer.

## Patentansprüche

1. Flammhemmende thermoplastische Harzzusammensetzung, umfassend:
(A) 100 Gewichtsteile eines transparenten ABS-Harzes, enthaltend (a₁) 20 bis 100 Gew.-% Pfropfcopolymer, zusammengesetzt aus 5 bis 60 Gewichtsteilen eines Kautschukpolymers, 1 bis 30 Gewichtsteilen einer aromatischen Vinylverbindung, 10 bis 40 Gewichtsteilen einer ungesättigten Nitrilverbindung und 10 bis 60 Gewichtsteilen einer (Meth)acrylsäurealkylesterverbindung; und (a₂) 0 bis 80 Gew.-% Styrolcopolymer, zusammengesetzt aus 40 bis 80 Gewichtsteilen einer (Meth)acrylsäurealkylesterverbindung, 10 bis 30 Gewichtsteilen einer aromatischen Vinylverbindung und 0 bis 50 Gewichtsteilen einer ungesättigten Nitrilverbindung; und
(B) 0,1 bis 15 Gewichtsteile einer ringförmigen Alkylphosphonsäureesterverbindung der Formel (I) 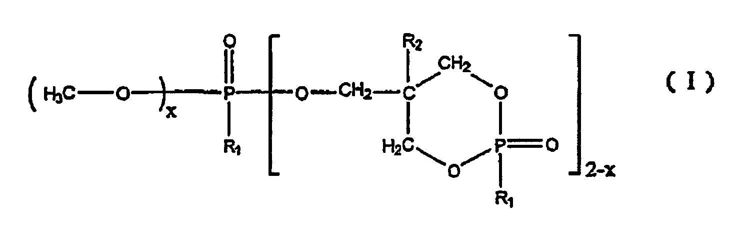
wobei R₁ und R₂ unabhängig voneinander für C₁-C₄-Alkyl stehen und x für 0 oder 1 steht.

2. Flammhemmende thermoplastische Harzzusammensetzung wie in Anspruch 1 definiert, wobei das Kautschukpolymer ausgewählt ist aus der Gruppe, bestehend aus einem dienhaltigen Kautschuk, einem gesättigten Kautschuk, in welchem Wasserstoff an den dienhaltigen Kautschuk addiert ist, einem Isoprenkautschuk, einem Acrylkautschuk und einem Terpolymer von Ethylen-Propylen-Dien (EPDM); wobei das aromatische Vinylmonomer ausgewählt ist aus der Gruppe, bestehend aus Styrol, α-Methylstyrol, p-Methylstyrol; wobei die ungesättigte Nitrilverbindung ausgewählt ist aus der Gruppe, bestehend aus Acrylnitril, Methacrylnitril und Ethacrylnitril; wobei die (Meth)acrylsäurealkylesterverbindung ausgewählt ist aus der Gruppe, bestehend aus Methylmethacrylat, Ethylmethacrylat und Butylmethacrylat.

3. Flammhemmende thermoplastische Harzzusammensetzung wie in Anspruch 1 definiert, ferner umfassend 0 bis 20 Gewichtsteile einer aromatischen Phosphorsäureesterverbindung der folgenden Formel (II) 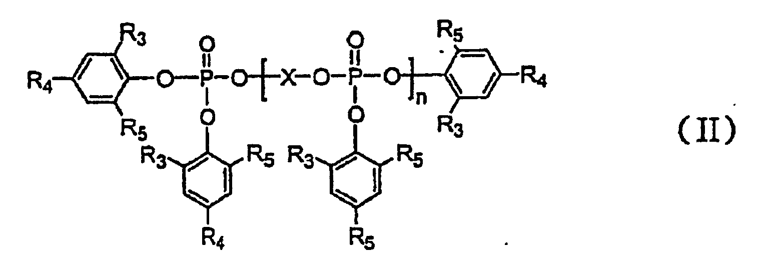 wobei R₃, R₄ und R₅ unabhängig voneinander für Wasserstoff oder C₁-C₄-Alkyl stehen; X für eine C₆-C₂₀-Arylgruppe oder alkylsubstituierte C₆-C₂₀-Arylgruppe steht, bei welchen es sich um Derivate eines Dialkoholderivats wie Resorcinol, Hydrochinol und Bisphenol-A handelt; und n für 0~4 steht.

4. Flammhemmende thermoplastische Harzzusammensetzung wie in Anspruch 1 definiert, ferner umfassend 0 bis 30 Gewichtsteile eines Zusatzes, ausgewählt aus der Gruppe, bestehend aus Wärmestabilisatoren, Antioxidationsmitteln, Lichtstabilisatoren, organischem oder anorganischem Pigment, Farbstoff und anorganischem Füllstoff.

5. Flammhemmende thermoplastische Harzzusammensetzung wie in Anspruch 1 definiert, wobei das transparente ABS-Harz zusammengesetzt ist aus (a₁) 20 bis 70 Gew.-% Pfropfcopolymer und (a₂) 30 bis 80 Gew.-% Styrolcopolymer.

## Revendications

1. Composition de résine thermoplastique retardatrice de flamme, comprenant :
(A) 100 parties en poids d'une résine ABS transparente contenant (a₁) 20 à 100 % en poids d'un copolymère greffé composé de 5 à 60 parties en poids d'un polymère caoutchouteux, de 1 à 30 parties en poids d'un composé vinylaromatique, de 10 à 40 parties en poids d'un composé nitrile insaturé et de 10 à 60 parties en poids d'un composé ester alkylique de l'acide (méth)acrylique ; et (a₂) 0 à 80 % en poids d'un copolymère styrénique composé de 40 à 80 parties en poids d'un composé ester alkylique de l'acide (méth)acrylique, de 10 à 30 parties en poids d'un composé vinylaromatique et de 0 à 50 parties en poids d'un composé nitrile insaturé : et
(B) 0,1 à 15 parties en poids d'un composé ester d'un acide alkylphosphonique annulaire représenté par la formule (I) : 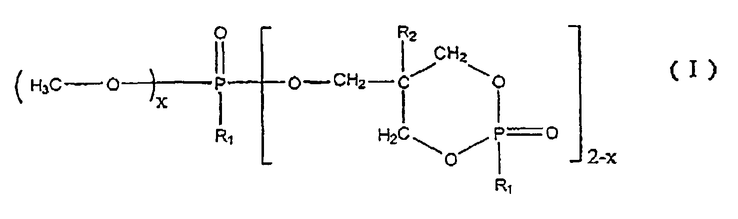
dans laquelle R₁ et R₂ représentent chacun indépendamment de l'autre un groupe alkyle en C₁-C₄, et x vaut 0 ou 1.

2. Composition de résine thermoplastique retardatrice de flamme selon la revendication 1, dans laquelle ledit polymère caoutchouteux est choisi dans le groupe consistant en un caoutchouc diénique, un caoutchouc saturé dans lequel de l'hydrogène est ajouté audit caoutchouc diénique, un caoutchouc isoprène, un caoutchouc acrylique et un terpolymère éthylène-propylène-diène (EPDN); ledit monomère vinylaromatique est choisi dans le groupe consistant en le styrène, l'α-méthylstyrène, le p-méthyl-styrène ; ledit composé nitrile insaturé est choisi dans le groupe consistant en l'acrylonitrile, le méthacrylo-nitrile et l'éthacrylonitrile; ledit composé ester alkylique de l'acide (méth)acrylique est choisi dans le groupe consistant en le méthacrylate de méthyle, le méthacrylate d'éthyle et le méthacrylate de butyle.

3. Composition de résine thermoplastique retardatrice de flamme selon la revendication 1, qui comprend en outre 0 à 20 parties en poids d'un composé ester de l'acide phosphorique aromatique représenté par la formule (II) ci-après : 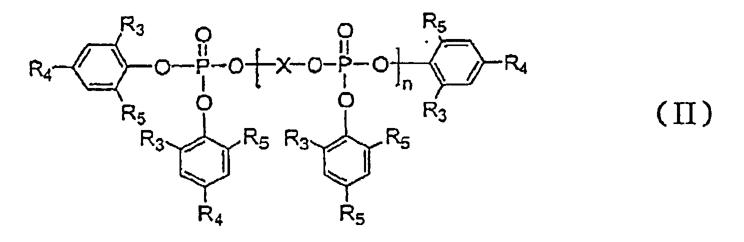 dans laquelle R₃, R₄ et R₅ sont choisis chacun indépendamment des autres parmi l'atome d'hydrogène ou le groupe alkyle en C₁-C₄ ; X est un groupe aryle en C₆-C₂₀ ou un groupe aryle en C₆-C₂₀ à substitution alkyle, qui sont des dérivés d'un dérivé dialcool tel que le résorcinol, l'hydroquinol et le bisphénol A ; et n vaut 0~4.

4. Composition de résine thermoplastique retardatrice de flamme selon la revendication 1, qui comprend en outre 0 à 30 parties en poids d'un additif choisi dans le groupe consistant en les thermostabilisants, les antioxydants, les photostabilisants, les pigments organiques ou inorganiques, les colorants et les charges inorganiques.

5. Composition de résine thermoplastique retardatrice de flamme selon la revendication 1, dans laquelle ladite résine ABS transparente est composé (a₁) de 20 à 70 % en poids d'un copolymère greffé et (a₂) de 30 à 80 % en poids d'un copolymère styrénique.
